# EUROPEAN PATENT SPECIFICATION

(11) **EP 2 124 323 B1**
(45) Date of publication and mention of the grant of the patent: **26.10.2011**
(21) Application number: 08156501.2
(22) Date of filing: 20.05.2008
(51) Int. Cl.: H02M 5/458

(54) **A phase locked loop determining mains phase by inspection of DC link voltage**
Phasenregelkreis zur Bestimmung der Netzphase durch Untersuchung der Gleichspannungsverbindung
Boucle verrouillée de phase déterminant la phase principale par l'inspection d'une tension de lien CC

(43) Date of publication of application: 25.11.2009
(73) Proprietor: SIEMENS AKTIENGESELLSCHAFT, 80333 München (DE)
(72) Inventor: CARTER, Robert, Knutsford, Cheshire WA16 8XU (GB)
(74) Representative: Morgan, Marc

(56) References cited:
- EP-A- 0 751 610

## Description

This invention relates to a phase locked loop particularly but not exclusively for use in an AC drive.

In AC drives it may be desirable to lock the controller to the frequency and phase of the mains supply for example for the cancellation of mains current harmonics as described in co-pending patent application agent's reference 2007P16031 EP. EP0751610A1 discloses a motor control system including an AC drive having a rectifier bridge, an inverter and a pulse width modulator for producing in conjunction with the inverter three-phase driving waveforms to be applied to a motor. It includes reactive components to reduce harmonic components in the current supplied from an AC power supply.

According to the invention there is provided a phase locked loop device according to claim 1.

A specific embodiment of the invention will now be described, by way of example only, with reference to the drawing in which:
Figure 1 shows in block diagram form an AC motor driver in accordance with the invention;
Figure 2 is a system block diagram for a phase locked loop in accordance with the invention and used in the AC motor driver of figure 1; and
Figure 3 is an explanatory diagram.

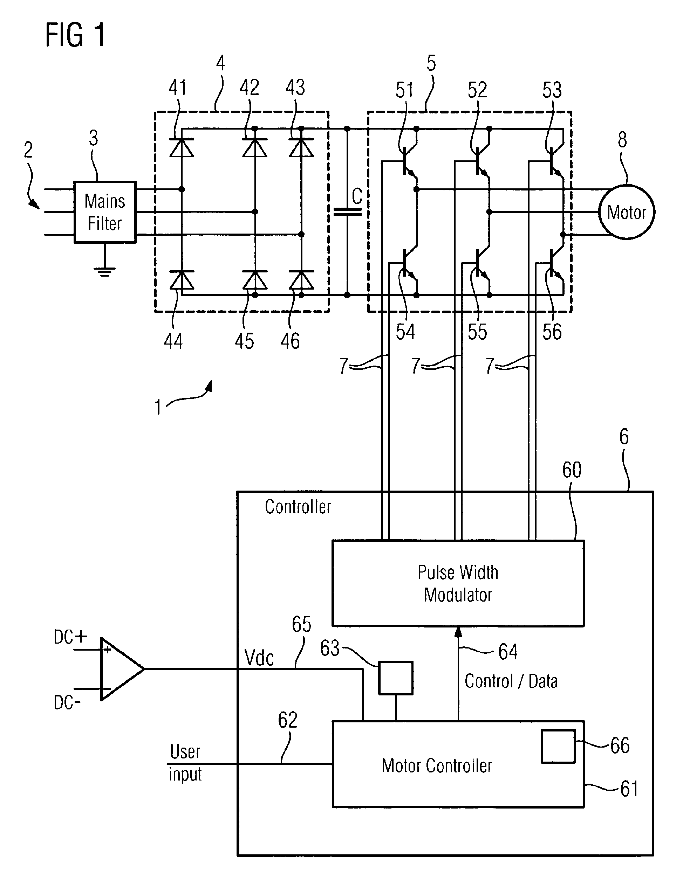

With reference to figure 1, an AC motor drive and AC motor arrangement 1 is shown and comprises a three phase mains voltage supply 2 applied to a mains filter 3 which in turn provides a three phase filtered output to a rectifier 4. The rectifier 4 provides a DC link voltage to the upper voltage rail DC+ and a lower rail DC- (which is smoothed by a capacitor C) to an inverter 5. The inverter 5 is controlled by a controller/processor 6 via control input signals applied via lines 7. The resultant three phase driving voltages are output to an AC motor 8 which rotates accordingly.

The mains filter 3 comprises a number of wire wound inductors, capacitors and resistances which filter the input mains voltage in a manner well known to the skilled person.

The rectifier 4 converts the applied input filtered AC phases into a rectified DC output (again in a manner that is well known in the art) using a bridge network of rectifiers 41 to 46. This output is generally known as the DC link.

The inverter 5 comprises six switching elements in this case transistors 51 to 56. The gates of the transistors 51 to 56 are coupled to the control signal lines 7. Pulse width modulated signals are provided on the control lines to selectively switch the states of the transistors 51 to 56 to provide the desired three phase driving voltages to be applied to the motor 8. This process is also well known in the art.

The processor 6 is programmed to provide the correct control signals to the control lines 7 in accordance with the invention.

The processor 6 includes a pulse width modulator 60 which is coupled to a motor controller 61 which in use provides control data 64 to it. The motor controller 61 has a user input 62 which allows a motor set point and acceleration rates to be entered. These are held in associated memory 63.

The motor controller 61 operates in open or closed loop. By open loop it is meant that the data 64 comprises voltage and frequency set points sent to the PWM 60. In closed loop (vector operation) voltage and phase set points are sent to the PWM 60. The phase set points must be continuously updated in order to rotate the motor in closed loop control.

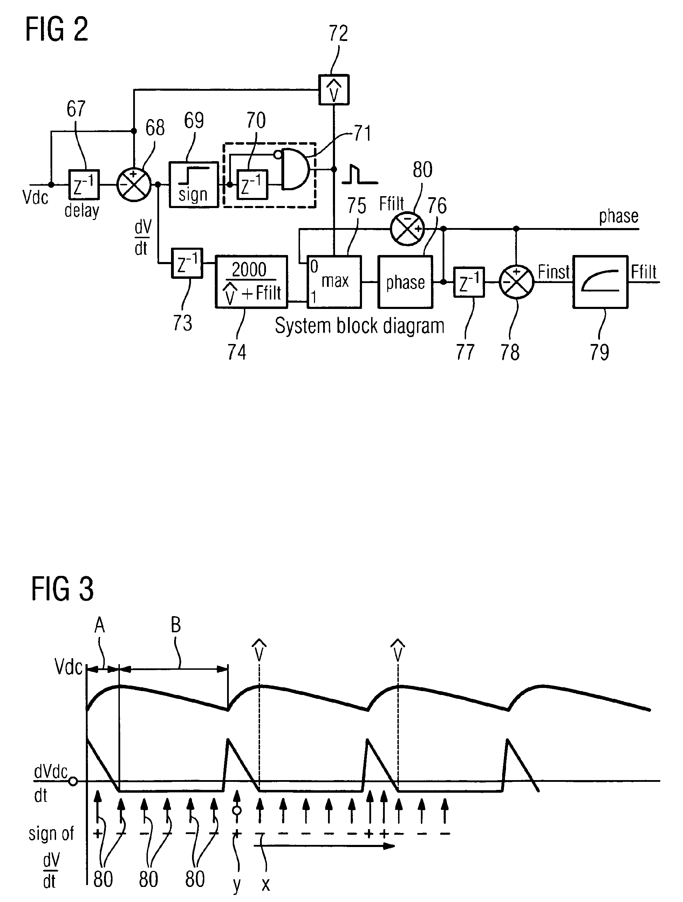

The phase locked loop is provided by the motor controller 61 and will typically comprise software provided functionality. The motor controller 61 is connected to a measurement of the DC link voltage Vdc via input 65. The motor controller 61 includes a phase locked loop module 66 which is shown in greater detail in figure 2. It comprises a delay register 67 to which the Vdc measurement is applied. The delayed output is coupled to a subtractor 68 and the dv/dt thus determined is passed to two branches. The first branch includes a zero crossing detector 69 which identifies any peaks in the Vdc waveform. This provides an output to delay 70 and an And gate 71 with one inverted input which detects a positive to negative transition in the dv/dt signal. The result is used to latch a peak Vdc signal using latch 72 which is used in the phase lock loop.

The second branch includes a delay 73 which passes a delayed output to a calculation block 74 which calculates accurate phase signal for the mains supply. This involves a multiplication of dv/dt by a constant which in this case is 2000. The result is divided by the latch value of V peak (determined above) multiplied by Ffilt which is the filtered frequency value (to be described later). The output of the calculation is an instantaneous phase value, which is passed to a multiplexer 75. The multiplexer output is passed to a phase register 76. The phase register provides an output to a delay 77 and subtractor 78 which together form a differentiator which differentiates to give the instantaneous frequency Finst. This is applied to a low pass filter 79 to provide a filtered frequency, FFilt. FFilt is fed back to an adder 80. The adder 80 is coupled to the output of the phase register 76 and is coupled to an input of the multiplexer 75. The multiplexer 75, the phase register 76 and the adder 80 form a digital frequency synthesiser. This keeps the phase updated correctly during the period when the dc link voltage measurement is constrained by the capacitor, and therefore the instantaneous phase calculation output is meaningless.

Figure 3 shows dv/dt in relation to Vdc over time. It will be seen that Vdc has a profile which is determined by the connection to the mains voltage over region A and then by the decay of a capacitor C over region B. The problem addressed is that the motor control only operates at the sample periods 80 and thus only provides low accuracy. Higher accuracy is required to achieve good phase locking performance.

In the figure is shown the sign of dv/dt at the sample instants. Also is shown the variation of dv/dt. It can be seen that the variation is slightly negative over region B and then has, over region A, a sharply rising peak which falls back down to the next slightly negative slope for the next region B.

In the apparatus, the phase of the mains is only actually visible over region A. Therefore the apparatus times itself by detecting the peaks when dv/dt passes through zero.

In the apparatus this is determined roughly by monitoring the sign of dv/dt and then more accurately by examining the level of dv/dt for the sample before it passes through zero. In the figure it will be seen that at sample X a sign transition occurs from the previous positive to a negative. Thus, the sample Y immediately before is taken to be the sample determining the supply phase.

The motor controller 61 is then able to lock its control data to the phase of the supply and to control the pulse width modulator 60 accordingly.

In the described embodiment, the blocks 67 to 75 provide a phase sensitive detector, blocks 76 and 80 provide a voltage controlled oscillator and blocks 77, 78 and 79 are the phase locked loop control.

## Claims

1. A phase locked loop device(66) for phase locking a controller(61) to a mains supply(2) being used to generate a dc link voltage (Vdc) by use of a rectifier bridge(41-46) and capacitor arrangement (C), which controller sensing the said dc link voltage **characterised in that** the phase locked loop device(66) comprises a differentiator(68) for providing dv/dt of the dc link voltage, means to sample said dv/dt, means to observe said dv/dt passing through zero by monitoring a change of sign of said dv/dt, and means to determine the phase of the mains supply from the the sample of said dv/dt dv/dt at the sample point of said dv/dt before the sample point correlated to the change of sign of said dv/dt.

2. A device as claimed in claim 1 wherein the phase is determined by detecting voltage peaks.

3. A device as claimed in claim 1 comprising means to provide a digitally synthesised frequency used by the controller(61).

4. A device as claimed in claim 3 wherein the means provides the synthesised frequency by differentiation and filtering of the detected phase.

5. A motor controller comprising a phase locked loop as claimed in any preceding claim.

## Patentansprüche

1. Phasenregelkreisvorrichtung (66) zur Phasenverriegelung einer Steuereinrichtung (61) mit einer Netzstromversorgung (2), die zur Erzeugung einer DC-Zwischenkreisspannung (Vdc) verwendet wird, durch Verwendung einer Gleichrichterbrücken- (41-46) und Kondensatoranordnung (C), wobei die Steuereinrichtung die besagte DC-Zwischenkreisspannung erfasst, **dadurch gekennzeichnet, dass** die Phasenregelkreisvorrichtung (66) einen Differentiator (68) zum Bereitstellen von dv/dt der DC-Zwischenkreisspannung, Mittel zum Abtasten des besagten dv/dt, Mittel zum Beobachten des Nulldurchgangs des besagten dv/dt durch Überwachen einer Vorzeichenänderung des besagten dv/dt und Mittel zum Bestimmen der Phase der Netzstromversorgung aus dem Abtastwert des besagten dv/dt an dem Abtastpunkt des besagten dv/dt vor dem Abtastpunkt, der mit der Vorzeichenänderung des besagten dv/dt korreliert ist, umfasst.

2. Vorrichtung nach Anspruch 1, wobei die Phase durch Detektieren von Spannungsspitzen bestimmt wird.

3. Vorrichtung nach Anspruch 1, welche Mittel zum Bereitstellen einer digital synthetisierten Frequenz umfasst, die von der Steuereinrichtung (61) verwendet wird.

4. Vorrichtung nach Anspruch 3, wobei das Mittel die synthetisierte Frequenz durch Differenzieren und Filtern der detektierten Phase bereitstellt.

5. Motorsteuereinrichtung, welche einen Phasenregelkreis nach einem der vorhergehenden Ansprüche umfasst.

## Revendications

1. Dispositif à boucle verrouillée en phase (66) pour verrouiller en phase un régulateur (61) sur une alimentation par réseau (2) utilisée pour produire une tension de liaison à courant continu (Vdc) par utilisation d'un montage d'un pont de redresseurs (41-46) et d'un condensateur (C), lequel régulateur détecte ladite tension de liaison à courant continu, **caractérisé en ce que** le dispositif à boucle verrouillée en phase (66) comprend un différenciateur (68) pour fournir le dV/dt de la tension de liaison à courant continu, un moyen pour échantillonner ledit dV/dt, un moyen pour observer le passage par zéro dudit dV/dt en surveillant un changement de signe dudit dV/dt, et un moyen pour déterminer la phase de l'alimentation par réseau à partir de l'échantillon dudit dV/dt au point d'échantillonnage dudit dV/dt avant le point d'échantillonnage corrélé au changement de signe dudit dV/dt.

2. Dispositif selon la revendication 1 dans lequel la phase est déterminée par détection de crêtes de tension.

3. Dispositif selon la revendication 1 comprenant un moyen pour fournir une fréquence synthétisée numériquement utilisée par le régulateur (61).

4. Dispositif selon la revendication 3 dans lequel le moyen fournit la fréquence synthétisée par différenciation et filtrage de la phase détectée.

5. Régulateur de moteur comprenant une boucle verrouillée en phase selon l'une quelconque des revendications précédentes.
